# EUROPEAN PATENT APPLICATION

(11) **EP 4 456 234 A1**
(43) Date of publication of application: **30.10.2024**
(21) Application number: 23170468.5
(22) Date of filing: 27.04.2023
(51) Int. Cl.: H01M 10/054, H01M 10/36, H01M 4/38, H01M 4/505, H01M 4/58, H01M 4/62, H01M 4/66, H01M 50/105, H01M 50/121

(54) **A NA-ION BIORESORBABLE AND FLEXIBLE ELECTROCHEMICAL MICRO-BATTERY**

(71) Applicant: Institut Mines Telecom, 91120 Palaiseau (FR)
(72) Inventor: DJENIZIAN, Thierry, 13390 AURIOL (FR); BHATIA, Ankush, 91000 EVRY-COURCOURONNES (FR); BADDOUR HADJEAN, Rita, 93460 GOURNAY-SUR-MARNE (FR); PERREIRA-RAMOS, Jean-Pierre, 94440 MARIOLLES EN BRIE (FR); LATHAKUMARY VIJAYAN, Bincy, 13120 GARDANNE (FR)
(74) Representative: Cabinet Nony

(57) **Abstract**

The invention essentially in a sodium-ion micro-battery only composed of biocompatible materials that can be degraded and eliminated by biological fluids with 3D electrode design with micropillars which can ensure the mechanical features and enhanced electrochemical performance in terms of areal capacity, notably superior to 1mAh.cm⁻², cycling stability, and rate capability to power various implanted bioelectronic devices.

## Description

### Technical field

The present invention relates to the field of electrochemical accumulators, and more particularly sodium-ion (Na-ion) accumulators.

The invention aims primarily to propose a new architecture of such accumulators, which allows them to be both bendable (flexible) and bioresorbable in an animal or a human body.

An accumulator according to the invention can be implemented for powering implantable electronic systems. For example, an accumulator to the invention can be used to power an Organic light-emitting diode (OLED), which is implantable in an animal or a human body. For example, also, an accumulator to the invention can be useful to fulfill the performances requirements of miniaturized sensors for Internet of Things (IoT) applications, such as electronic textiles, skin patches, drug delivery microchips, cochlear implants, etc...

### Prior art

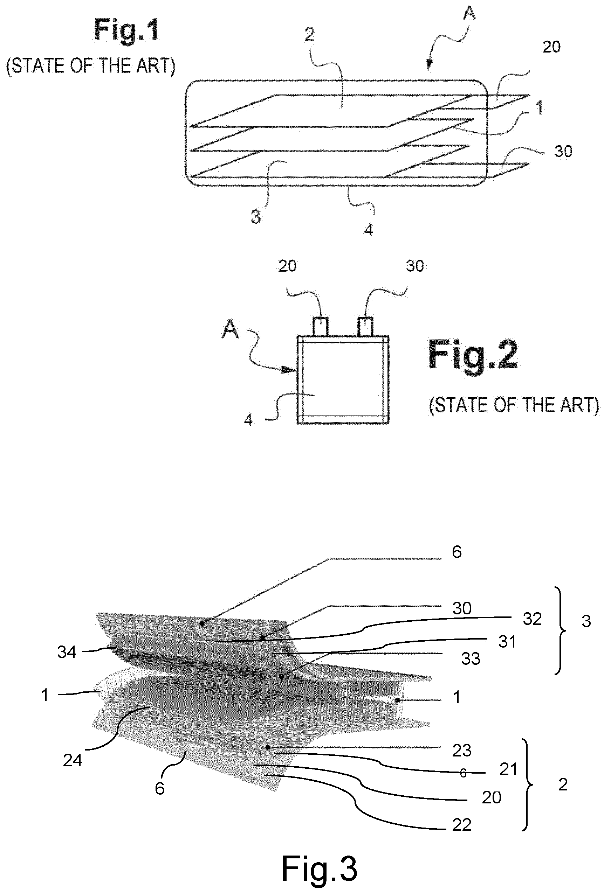

As illustrated schematically in figures 1 and 2, a lithium-ion battery or accumulator normally comprises at least one electrochemical cell consisting of an electrolyte component 1 between a positive electrode or cathode 2 and a negative electrode or anode 3, a current collector 20 connected to the cathode 2, a current collector 30 connected to the anode 3 and, finally, a packaging 4 arranged to contain the electrochemical cell tightly while being passed through by a part of the current collectors 20, 30.

The architecture of the conventional lithium-ion batteries comprises an anode, a cathode and an electrolyte. Several types of geometry of conventional architecture are known:
- a cylindrical geometry as disclosed in the patent application US 2006/0121348;
- a prismatic geometry as disclosed in the patents US 7348098B1, US 7338733B1;
- a stacked geometry as disclosed in the patent applications US 2008/060189, US 2008/0057392, and the patent US 7335448B1.

The electrolyte component 1 can be in solid, liquid or gel form. In this last form, the component can comprise a separator made of polymer, of ceramic or of microporous composite soaked with organic electrolyte or aqueous electrolytes or of ionic liquid type which allows the displacement of the lithium ion from the cathode to the anode for a charge and in reverse for a discharge, which generates the current. The electrolyte is generally a mixture of organic solvents, for example carbonates to which is added a lithium salt, typically LiPF6.

The positive electrode or cathode 2 is composed of lithium cation insertion materials which are generally composite, like LiFePO₄, LiCoO₂, LiNi_{0.33}Mn_{0.33}Co_{0.33}O₂.

The negative electrode or anode 3 is very often composed of graphite carbon or of Li₄TiO₅O₁₂ (titanate material), possibly also based on silicon or composite formed based on silicon.

The current collector 20 connected to the positive electrode is generally made of aluminum.

The current collector 30 connected to the negative electrode is generally made of copper, of nickel-plated copper or of aluminum.

These electrodes 2, 3 for Li-ion accumulators are usually made according to a continuous process by a technique of coating the active insertion material on a metal strip, as current collector, to constitute the active continuous layer. These coating techniques are known by the terms "slot die" or "roll to roll transfer".

A lithium-ion battery or accumulator can obviously comprise a plurality of electrochemical cells which are stacked on top of one another.

Traditionally, a Li-ion battery or accumulator uses a pair of materials on the anode and the cathode allowing it to operate at a high voltage level, typically equal to 3.6 volt.

Depending on the type of application targeted, the aim is to produce either a thin and flexible lithium-ion accumulator or a rigid accumulator: the packaging is then either flexible or rigid and in the latter case constitutes a kind of housing.

The flexible packagings are usually manufactured from a multilayer composite material, composed of a stacking of aluminum layers covered by one or more polymer films laminated by bonding.

The rigid packagings are, for their part, used when the applications targeted are restrictive where a long lifetime is sought, with, for example, much higher pressures to be withstood and a stricter required tightness level, typically less than 10⁻⁸ mbar.l/s, or in highly restrictive environments such as the aeronautic or space field.

For some applications, the main drawbacks of the traditional geometries of conventional architecture, which has been described above are that they are bulky, heavy, and rigid whatever their electrochemistry and their flexible or rigid packagings. For example, because of the recent increasing interest to developing small, rapid, and portable electronic devices it is becoming critically important to provide matching light and flexible energy-storage systems to power them.

To this end, lithium-ion batteries called as Linear fiber-shaped Li-ion Batteries (LIB) have become increasingly important owing to their advantages of miniaturization, conformability, and weavability.

Bioresorbable micro-batteries are particularly attractive for powering implantable electronic systems, but such body safe devices have also a strong impact for a larger spectrum of Internet of Things (IoT) applications such as electronic textiles, skin patches, drug delivery microchips, cochlear implants, etc.

In addition, the conception of biodegradable batteries is highly interesting for providing energy to environment friendly wearable devices like abandoned sensors and solving the crucial issue of material recycling.

Among all energy solutions for implantable bioelectronics, rechargeable microgenerators for low-consumption electronics relies mainly on the lithium (Li) based technologies (LIBs) owing to several advantages such as high energy and power densities, versatility, span life...: [1], [2] and in terms of abundance, uniform distribution, low cost, and easy recycling: [3].

However, these batteries encapsulating toxic elements cannot be safely degraded and must be removed by surgery and recycled after use.

Hence, efforts have been devoted to biocompatible self-degradable batteries: [4].

Currently, most bioresorbable devices consist of primary systems using metallic electrodes, e.g., Mg, Zn, Mo, etc., and liquid electrolytes, in general a biological fluid like blood, saliva, urine, which are responsible for fluctuating electrochemical performances.

Although solid-state and gel-like electrolytes have been proposed, the formation of by-products are hindering the electrode properties. In anyway, this type of batteries is not rechargeable and remain cumbersome, limiting their practical use: [5].

Besides the electrochemical performances and biodegradability features, the ideal batteries for IoT dedicated to medical implants should also be ultrathin, light, flexible, and fully integrable. Their manufacturing should also be compatible with Integrated Circuit technologies and microelectronic processes.

Therefore, the challenging task is to design flexible energy storage micro batteries showing high electrochemical performances that can be degraded by biological fluids and safely removed by the body.

Based on similar mechanism than LIBs, the very recent Sodium-ion Batteries (SIB) offer a promising alternative as the main components of the batteries can be non-toxic and biocompatible.

The electrolyte is a key component that governs the electrochemistry in a battery, but related research for SIBs is currently at the early stage.

Commonly used organic electrolytes have poor thermal stability, high flammability, and low heat capacity. In addition, organic electrolytes are potential hazards due to their volatility and toxicity.

Safer and sustainable polymer electrolytes represent the best choice to overcome these limitations: [6].

Solid polymer electrolytes (SPE) still suffer from key drawbacks, including their low ionic conductivity and high interfacial resistance. Gel polymer electrolytes (GPEs) on the other hand combine the advantages of SPEs and conventional liquid electrolytes and provide a route toward the rational design of SIBs with improved safety performance and especially flexibility. However, to date, their development for SIBs is at the very early stage.

In addition, the fabrication of all-solid-state Na-ion micro-batteries (SIMs) is in its infancy, which justifies their study for developing new bioresorbable flexible energy storage devices.

Among the few complete cells reported so far, the authors of publication have fabricated a quasi-solid-state planar ionogel-based SIM, reaching 145 µWh.cm⁻², which was obtained by separator-free interdigital microelectrodes of sodium titanate anode and sodium vanadate phosphate cathode, embedded into a three-dimensional interconnected graphene scaffold: [7].

3D-printed SIMs has been also investigated: [8]. The resulting thick SIMs, of a thickness of 1200 µm thick, showed a rate capability of 3.6 mAh.cm⁻² at 40 mA.cm⁻² and robust long-term cycle life up to 6000 cycles.

In terms of biocompatible batteries, efforts have been also devoted to aqueous Na-ion batteries.

Family of flexible belt- and fiber-shaped aqueous systems have been studied in various Na+/- containing aqueous electrolytes including a Na₂SO₄ solution, normal saline, and cell-culture medium: [9].

Symmetric SIMs obtained from interdigitated Na₂VTi(PO₄)₃/C based electrodes and different aqueous electrolytes like simulated body fluids have been also tested: [10].

There is a need to further improve the Na-ion micro-battery (SIM) solutions, notably with good electrochemical performances (high energy and/or power densities and/or area capacity and/or cycling stability and/or rate capability) and to render them flexible, implantable under skin and entirely bioresorbable.

The aim of the invention is to address such need at least partly.

### Summary of the invention

To do this, the invention relates, under one of its aspects, to a Na-ion micro-battery (SIM), comprising:
- at least one flexible encapsulating substrate made of at least one biocompatible and degradable polymer;
- a first and a second electrically conductive biocompatible and degradable film or foil forming a current collector, each comprising two main faces, one of which is linked to the flexible substrate whereas the other supports an active biocompatible and degradable electrode material arranged under the form of micropillars extending from the current collector in defining a 3D electrode, the electrode active material supported by the second collector being of opposite polarity to that supported by the first collector;
- a biocompatible and degradable polymer electrolyte, arranged between the two 3D electrodes with contact with the micropillars and filling the gaps between said micropillars. According to an advantageous embodiment, the polymer of the flexible encapsulating substrate is selected among poly (lactic-co-glycolic acid) (PLGA), a polyester urethane or a mixed thereof. Other biocompatible and degradable polymer can be implemented.

Advantageously, the first and/or the second collector is made of magnesium (Mg). Other biocompatible materials can be implementable, such as Mo, Fe, Z, and alloys, e.g., FeCuZn, etc. The active material of the electrodes can be layered onto current collectors. The current collectors can also be deposited onto the slurry of the active material before subsequent deposition of the encapsulating material of the substrate, like PLGA.

Because of the abundance and non-toxicity of Mn, sodium manganate materials can be considered as positive electrode material.

The active materials are then formulated as electrode slurries, with binder and carbon. Aqueous processing using CMC binder improve the sustainability and environmental impact of the battery technology. Na-CMC has been selected as it is not toxic and shows good solubility in water, low cost, biodegradability, and biocompatibility. The weight percentages of the active material, conductive carbon and binder components can be adapted. Na_{0.44}MnO₂ (NMO) has been designated as it is regarded as one of the most promising (SIB) cathodes owing to its low cost, simple preparation, large capacity of 121 mAh.g⁻¹, and high stability: [10].

Thus, according to another advantageous embodiment, the active material of the positive electrode is made of Na_{0.44}MnO₂ (NMO). All biocompatible sodiated oxide materials can be implemented as active material of the positive electrode.

According to this embodiment, and an advantageous variant, the material is obtained by mixing 80 wt % NMO with 15 wt % acetylene black and with 5 wt % Na-carboxymethylcellulose (Na-CMC) using water as a solvent.

NMO orthorhombic structure are favorable to transport the relatively large Na+ and capable of tolerating the stress generated during charging/discharging.

NaTi₂(PO₄)₃ (NTP), which large capacity of 133 mAh.g⁻¹, has been selected as negative electrode material due to delivering high performance toward NMO:[11].

Due to the low electronic conductivity of NTP, carbon composite NTP-C are preferred and prepared by a solid-state sintering method: [12].

According to an advantageous embodiment, the active material of the negative electrode is made of a NaTi₂(PO₄)₃ carbon (NTP-C) composite. All biocompatible materials, such as oxide materials or porous silicon can be implemented as active material of the negative electrode.

According to this embodiment, and an advantageous variant, the material is obtained by mixing 80 wt % NTP-C with 15 wt % acetylene black and with 5 wt % Na-carboxymethylcellulose (Na-CMC) using water as a solvent.

According to another advantageous embodiment, the polymer electrolyte is a gel polymer composed of an ionic conductor polymer, Na salt, and plasticizer.

According to this embodiment, and an advantageous variant, the ionic conductor polymer may be selected among sodium carboxymethyl cellulose (Na-CMC), polyethylene glycol (PEG) .... Biocompatible Gel Polymer Electrolyte (GPE) can be implemented as polymer electrolyte.

According to this embodiment, and an advantageous variant, the Na salt may be selected among Na₂SO₄, Na₂SO₃....All biocompatible sodium salts, such as NaCl, can be implemented.

According to another advantageous embodiment, the micro-battery can comprise an additional biocompatible and degradable film, as an electrical insulating separator, arranged between the two 3D electrodes (2; 3), preferably made of sodium carboxymethyl cellulose (Na-CMC).

Preferably, the thickness of the flexible encapsulating substrate is between 1 to 100 µm.

Thus, the invention consists essentially in a sodium-ion micro-battery only composed of biocompatible materials that can be degraded and eliminated by biological fluids with 3D electrode design with micropillars which can ensure the mechanical features and enhanced electrochemical performance in terms of areal capacity, notably superior to 1mAh.cm⁻², cycling stability, and rate capability to power various implanted bioelectronic devices.

The battery design relies on the assembling of two flexible thin film of foils forming the current collectors each carrying arrays of micropillar electrodes, which can insert reversibly Na+ ions and separated by a polymer electrolyte.

Ultimately, the invention provides numerous advantages, some of which can be cited as follows:
- unlike compact thin-films for active material, micropillars show empty spaces that prevent the fracture of the material under mechanical strain and the formation of cracks at the current collector related to the volume variations of the electrodes during insertion/extraction of Na+ ions;
- 3D structured electrodes with micropillars also increase the energy and power densities of the micro-battery owing to the larger surface area established between the electrodes and the electrolyte;
- a degradation of micropillars leads to small size by-products that can be easily released by the body fluids;
- a degradation rate of 3D electrodes is faster than planar usual electrodes;
- compared to results reported in literature, as mentioned above, a micro-battery according to the invention will lead to a safe and flexible micropower source showing high energy and power densities that can be disintegrated and eliminated by the body fluids.

The invention also concerns a use a micro-battery such as mentioned above to electrically supply a connected and communicating object, a biomedical device, a human implant, a bioelectronic device and a human/machine interface.

Thus, the invention can truly lay the foundation of a future energy solution for healthcare IoT by powering subdermal implanted devices and systems for in-vivo sensing, able to operate in the body for a prescribed time and detect specific disease biomarkers/drugs, transmit physiologic relevant data on-demand and wirelessly (e.g., red/NIR light or radio frequency - RFID) through the skin, until the entire system will be fully and safely bio-resorbed.

A micro-battery according to the invention can also deeply penetrate other IoT markets as the crucial recycling issue of toxic components can be overcome.

Other advantages and features of the invention will emerge more clearly on reading the detailed description of exemplary implementations of the invention given in an illustrative and nonlimiting manner with reference to the following figures.

### Brief description of the drawings

[Fig 1] figure 1 is an exploded perspective schematic view showing the different elements of a lithium-ion accumulator.
[Fig 2] figure 2 is a front view showing a lithium-ion accumulator with its flexible packaging according to the state of the art.
[Fig 3] figure 3 is a perspective partial and exploded view of a sodium-ion micro-battery according to the invention.
[Fig 4] figure 4 are images made by scanning electron microscope (SEM) of a Na_{0.44}MnO₂ material (NMO) as a cathode according to the invention.
[Fig 5] figure 5 are (a) XRD patterns of NMO sample, insert: corresponding structure schematic illustration showing two different sites of sodium, (b) Raman spectra of NMO in the region of wave number between 100 and 900 cm⁻¹.
[Fig 6] figures 6 are (a) charge/discharge profiles and (b) cycling performances of NMO based cathodes at 0.1 C in the potential range of 2.0 to 4.0 V vs. Na+/Na, according to the invention.
[Fig 7] figure 7 are images made by scanning electron microscope (SEM) of a NaTi₂(PO₄)₃-C composite material as an anode according to the invention.
[Fig 8] figure 8 are (a) XRD patterns of NTP-C sample, insert: corresponding schematic structure of NTP, (b) Raman spectra of NTP-C in the region of wave number between 100 and 1800 cm⁻¹.
[Fig 9] figure 9 is charge/discharge profiles of NTP-C based anode at 0.1 C in the potential range of 1.0-3.0 V vs. Na+/Na.
[Fig 10] figure 10 is charge/discharge profiles of porous Si anode in the potential range of 1.0-3.0 V vs. Na+/Na.
[Fig 11] figure 11 show bio-disintegration rate of (a) polymer electrolyte according to the invention covered-NMO based paste and (b) polymer electrolyte according to the invention electrolyte covered-NTP-C based paste.
[Fig 12] figure 12 are SEM images of a cathode (a) before disintegration, (b) after 6 days; a polymer electrolyte-covered cathode (c) before disintegration, (d) after 6 days; an anode (e) before disintegration, (f) after 6 days; a polymer electrolyte-covered anode (g) before disintegration, and (h) after 6 days.
[Fig 13] figure 13 shows charge discharge profile of a micro-battery according to the invention with an NTP-C anode/a polymer electrolyte/a NMO cathode.

### Detailed description

Figures 1 to 2 relate to different examples of Li-ion accumulators, with flexible packagings according to the state of the art.

These figures 1 to 2 have already been commented on in the preamble and will not therefore be discussed further hereinbelow.

For clarity, the same references designating the same elements according to the state of the art and according to the invention are used for all the figures 1 to 3.

Figure 3 represents a Na-ion micro-battery according to the invention which is configured to be implantable under skin and entirely bioresorbable.

The micro-battery A includes the following components:
- at least one flexible encapsulating substrate 6 made of at least one biocompatible and degradable polymer;
- a conductive biocompatible and degradable film or foil forming a current collector 20, comprising two main faces, one of which 22 is linked to the flexible substrate 6 whereas the other 21 supports an active biocompatible and degradable electrode material 23 arranged under the form of micropillars 24 extending from the current collector 20 in defining a 3D cathode 2;
- a conductive biocompatible and degradable film or foil forming a current collector 30, each comprising two main faces, one of which 32 is linked to the flexible substrate 6 whereas the other 31 supports an active biocompatible and degradable electrode material arranged under the form of micropillars 34 extending from the current collector in defining a 3D anode 3;
- a biocompatible and degradable polymer electrolyte 1, arranged between the 3D cathode 2 and anode 3 with contact with the micropillars 24; 34 and filling the gaps between said micropillars.

### Electrodes formulations

The active materials are detailed below. They have been formulated as electrode slurries, with binder and carbon. Aqueous processing using CMC binder improves the sustainability and environmental impact of the battery technology.

Na-CMC has been selected as it is not toxic and shows good solubility in water, low cost, biodegradability and biocompatibility. The weight percentages of the active material, conductive carbon and binder components are optimized.

### Assembling of the micro-battery

The flexible substrate 6 may be made of PLGA or polyester urethane polymers used to encapsulate the electrochemical core 1, 2, 3.

The thickness of the encapsulating flexible substrate 6 can be adjusted between 1 µm to 100 µm to control the degradation starting date of the micro-battery.

Each of the electrode formulations is deposited on a Mg thin film as current collector 20, 30 by doctor blade technique.

Laser ablation is used to create vertical arrays of micropillars 24, 34 which are extending from the current collectors 20, 30. The technics can be made according to the procedure in [13]. Size and spacing between adjacent micropillars 24, 34 can be adjusted to improve the capacity by a factor 5 while ensuring the flexible feature of the electrodes 2, 3.

Finally, a polymer material is used as the electrolyte. Such a polymer layer acting also as separator, can be deposited by drop-casting or spin-coating on flexible microstructured electrodes before assembling the full cells. The use of a bioresorbable separator, e.g., a cellulose based membrane, can also be used to avoid the risk of short-circuit.

### Cathode formulation and characterization

### Formulation

The active material 23 of the cathode 3 is Na_{0.44}MnO₂ (NMO). This material is a sodium-ion biocompatible cathode, and its advantages are low cost, simple preparation, large capacity (121 mAh.g-1 vs. Na+/Na) and high stability.

NMO powder was synthesized using the co-precipitation route.

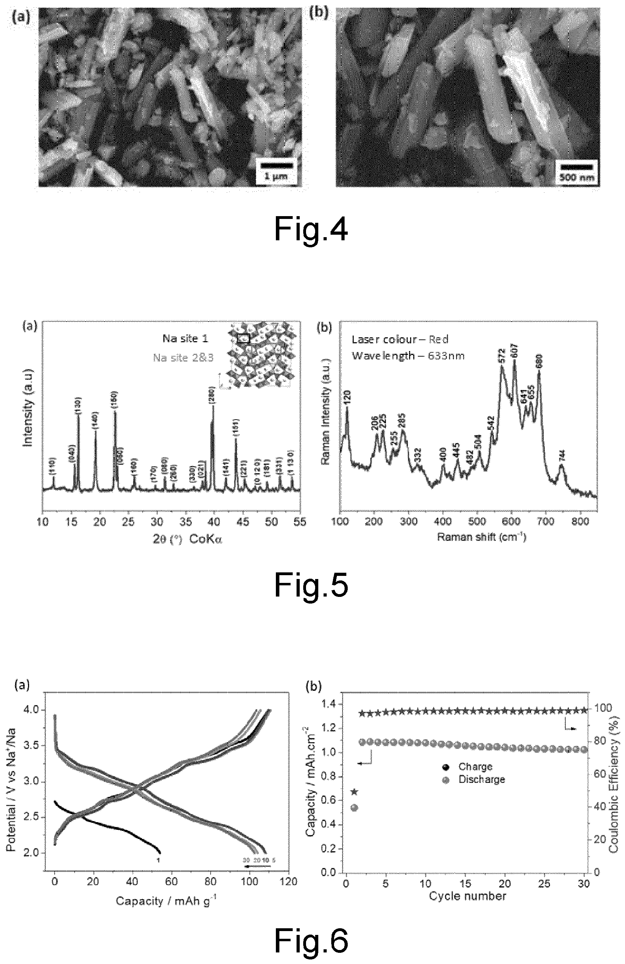

SEM images of Figure 4 shows a micro shaped morphology with uniform size distribution of the NMO particles of around 3-5 µm in length and 0.5-1 µm in width. This size will ensure the subsequent elimination by an animal or a human body. The uniform grains suggest a favorable Na-migration. The obtained morphological results match well as reported in the literature: [14].

The as-prepared NMO has been characterized by XRD and Raman spectroscopy, as shown on Figure 5, respectively a) and b). The results agree with previous reports, such as [15].

The cathode paste was prepared by mixing 80 wt % active material (i.e., as-prepared NMO) with 15 wt % acetylene black (biocompatible conductive agent) and 5 wt % Na-CMC as the biocompatible binder using water as a solvent and was deposited on Al current collector.

### Characterization

In order to validate the paste formulation, the cathode performance has been studied in a half-cell configuration using a well-known organic liquid electrolyte.

Figures 6 a) and b) illustrate respectively the typical charge/discharge profile and the cycling performance at 0.1C rate (10 hours of charge or discharge, respectively). The capacity obtained at the second cycle is 1.1 mAh cm⁻² (110 mAhg⁻¹) and retention of 94% of initial capacity was observed after 30 cycles.

This paste cathode formulation is therefore achieving our objective in terms of capacity and stability.

These results validate the formulation of the cathode material.

### Anode formulation and characterization

### Formulation

The active material 33 of the anode 2 is a titanium based NASICON compound, typically NaTi2(PO4)3 (NTP). This material is considered as super ionic conductor and biocompatible electrode material that possess high specific capacity, good structural stability, and cyclability for non-aqueous sodium ion batteries.

However, pure NTP suffers from poor electronic conductivity, so in order to remove the electronic conductivity limitation the synthesis of NTP is further optimized by mixing it with carbon in order to obtain ultrafast rate capability and superior high-rate cycling stability.

The synthesis of NTP-C has been achieved by a solid-state method.

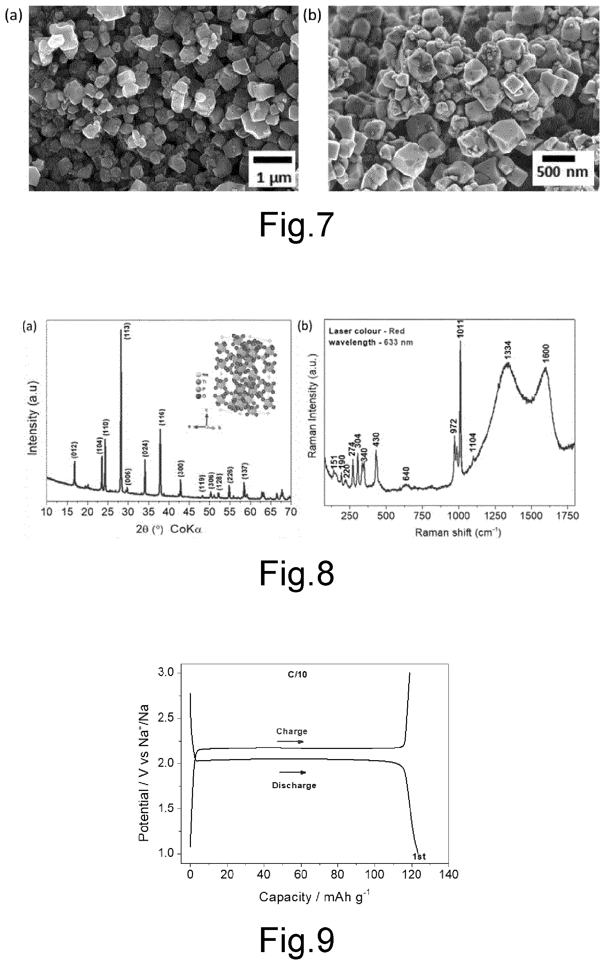

Figure 7 are SEM images of the NTP-C composite morphology with an aggregate size in the range of 0.1-0.4 µm intimately encapsulated by the carbon black. The NTP crystallites have equiaxed shape and are consistent with that reported in literature [16].

The as-prepared NTP-C has been characterized by XRD and Raman spectroscopy, as shown on Figure 8, respectively a) and b). The results agree with previous report, such as [17].

As for cathode electrode preparation, the negative electrode paste was obtained by mixing 80 wt % active material (i.e., as-prepared NTP-C) with 15 wt % acetylene black (biocompatible conductive agent) and 5 wt % Na-CMC as the biocompatible binder using water as a solvent and was deposited on Al current collector.

### Characterization

Figure 9 presents the galvanostatic discharge/charge voltage profiles for the 1st cycle within a potential range of 1.0-3.0 V at 0.1 C (1 C = 133 mA.g⁻¹). The profiles exhibit a flat potential plateau at around 2.1 V delivering a discharge capacity of 125 mAhg⁻¹ (1.25 mAh.cm⁻²) at first cycle. This paste electrode formulation is therefore achieving the required performances in terms of capacity and stability.

These results validate the formulation of the anode material.

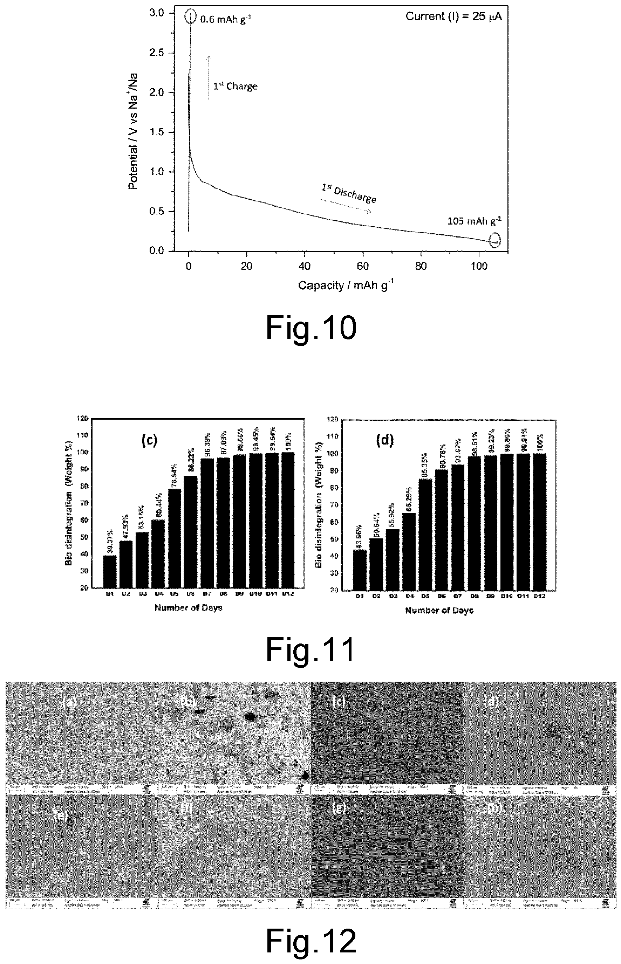

Porous Si membranes have been also tested as potential anode material. Unfortunately, the general performance was poor due to the irreversible insertion of Na ions leading to the complete loss of capacity after the first discharge, as shown on Figure 10.

### Polymer electrolyte formulations

Various polymer electrolytes were prepared by using sodium carboxymethyl cellulose (Na-CMC) or polyvinyl alcohol (PVA) as polymer material, sodium sulphate (Na2SO4) as salt (mass ratio 3:1), glycerin as plasticizer, and deionized water (DI) as solvent.

Table 1 summarizes the composition of each constituent of the polymer electrolytes and the corresponding electrochemical response.

**[Table 1]**

| **Electrolyte Number** | **Polymer** | **Salt** | **Plasticizer** | **Solvent** | **Electrochemical response** |
|---|---|---|---|---|---|
| 1 | Na-CMC | Na₂SO₄ | ------------- | DI | - |
| 2 | Na-CMC | Na₂SO₄ | 50 µl of glycerin | DI | - |
| 3 | PVA | Na₂SO₄ | ------------- | DI | - |
| 4 | PVA | Na₂SO₄ | 50 µl of glycerin | DI | - |
| 5 | Na-CMC | Na₂SO₄ | 5 ml of glycerin | DI | +++ |

Electrolyte formulations carrying no plasticizer, or a low amount of glycerin revealed a rigid morphology while electrolyte N°5 exhibited a gel type texture.

Electrochemical tests performed in a half-cell configuration using anode and cathode previously described have shown no electrochemical activity (battery is not charging) due to the low ionic conductivity of Na+ in solid-state electrolytes. Thus, electrolyte N°5 promoting a fast Na+ transport has been selected for the design of a full electrochemical cell 1,2,3.

These results validate the formulation of the polymer electrolyte.

Other additional tests may be carried out to confirm or not these results, in particular to invalidate or not the PVA.

### Disintegration study in simulated biological fluid

Disintegration of polymer electrolyte-coated electrodes on Al has been examined in 10 mM phosphate buffered solution (PBS) and 100 mM sodium chloride (NaCl) at 37°C at pH of 7.4. Bio disintegration tests were conducted in a climate chamber for 15 days.

Figure 11 a) and b) show respectively the biodisintegration rate of (a) electrolyte covered-NMO based paste and (b) electrolyte covered-NTP-C based paste.

Disintegration of electrolyte-coated electrodes 2, 3 in physiological fluid was calculated as the percentage of difference in mass of electrode material to the initial mass.

It took 12 days to disintegrate completely the micro-battery components. These results have been confirmed by SEM analysis shown in Figure 12 where the current collector surface is clearly visible after 6 days. More precisely, Figure 12 are SEM images of cathode (a) before disintegration, (b) after 6 days; Electrolyte-covered cathode (c) before disintegration, (d) after 6 days; Anode (e) before disintegration, (f) after 6 days; Electrolyte-covered anode (g) before disintegration, and (h) after 6 days.

These results validate the biodisintegration feature of all the components 1, 2, 3 of a micro-battery according to the invention.

### Fabrication of a micro-battery prototype

A micro-battery composed of electrolyte 1 coated anode 2 and cathode 3 materials was assembled and electrochemically characterized to obtain the charge-discharge profile.

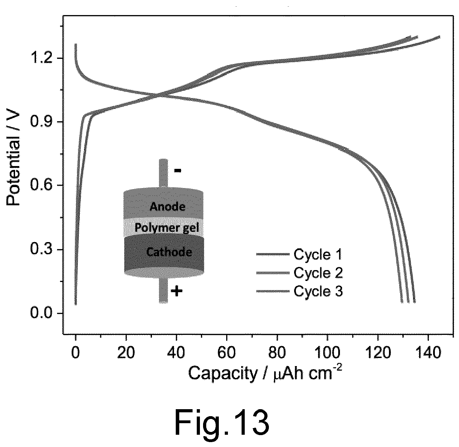

Figure 13 shows the first three charge-discharge cycles of the first NTP/polymer electrolyte/NMO prototype at a current of 10 µA.

The discharge capacity of the full micro-battery attains 138 µAh.cm^{- 2}.

Thus, the micro-battery prototype provided charge storage properties and it can be fully disintegrated in a biological medium. High performance biodegradable micro batteries for implantable applications can be foreseen.

The invention is not limited to the examples which have just been described; characteristics of the examples illustrated can notably be combined with one another in variants that are not illustrated.

Other variants and enhancements can be envisaged without departing from the scope of the invention.

For example, it can be foreseen to implement between the two 3D electrodes, an additional biocompatible and degradable film, as an electrical insulating separator. This additional film is preferably made of sodium carboxymethyl cellulose (Na-CMC).

To avoid the oxidation phenomena of current collector, a thin layer of gold can be layered for example by evaporation onto said collector.

### List of references cited:

[1] : Sheng et al., "Recent Advances of Energy Solutions for Implantable Bioelectronics," Adv. Healthc. Mater. 10, 2100199 (2021).
[2] : S. Mukherjee, A. Albertengo, T. Djenizian, "Beyond flexible Li-ion battery systems for soft electronics," Energy Storage Mater. 42, 773 (2021).
[3]: P. Johansson, et al., "Na-Ion Batteries - State of the Art and Prospects, in Series on Chemistry, Energy and the Environment, Prospects for Li-ion Batteries and Emerging Energy Electrochemical Systems," pp. 161-235 (2018).
[4]: S. Stauss, et al., "Biocompatible Batteries-Materials and Chemistry, Fabrication, Applications, and Future Prospects," Bull. Chem. Soc. Jpn. 91, 492, (2018).
[5]: X. Huang, et al, "A Fully Biodegradable Battery for Self-Powered Transients Implants", Small, 14, 1800994 (2018).
[6]: F. Gebert, et al., "Polymer electrolytes for sodium-ion batteries", Energy Storage Mater. 36, 10, (2021).
[7]: S. Zheng, et al.,"Ionogel-based sodium ion micro-batteries with a 3D Na-ion diffusion mechanism enable ultrahigh rate capability", Energy Environ. Sci. 13, 821 (2020).
[8]: J. Ma, et al., "3D Printing Flexible Sodium-Ion Micro batteries with Ultrahigh Areal Capacity and Robust Rate Capability", Adv. Mater. 34, 2205569 (2022).
[9]: Z. Guo et al., "Multi-functional Flexible Aqueous Sodium-ion Batteries with High Safety", Chem. 3, 348 (2017).
[10]: X. Zhou, et al., "Research progress of tunnel-structured Na0.44Mn02 cathode for sodium-ion batteries: a mini review", Electrochem. Com. 122, 106897 (2021).
[11]: Li et al., "Towards High Power High Energy Aqueous Sodium-Ion Batteries: The NaTi2(PO4)3/Na0.44MnO2 System". Adv. Energy Mater. 3, 290 (2013).
[12]: X. Cao, et al., "Facile synthesis of NaTi2(PO4)3-carbon composite through solid state method and its application in aqueous sodium ion battery", Mater. Lett. 231, 183 (2018).
[13]: M. Nasreldin, R. Delattre, B. Marchiori, M. Ramuz, S. Maria, J. L. de Bougrenet, T. Djenizian, "Microstructured electrodes supported on serpentine interconnects for stretchable electronics", APL. Mater. 7, 031507 (2019).
[14]: X. He et al., Nano Energy 27, 602 (2016). DOI.org/10.1016/j.nanoen.2016.07.021.
[15]: Le T.N. Huynh et al., Energy Storage 2, e121 (2020). DOI.org/10.1002/EST2.121.
[16]: Z. Li et al., Adv. Energy Mater. 3, 290 (2013). DOI: 10.1002/aenm.201200598.
[17] :G. Xu et al., Electrochim. Acta 254, 328 (2017). DOI.org/10.1016/j.electacta.2017.09.121.

## Claims

1. A sodium-ion (Na-ion) micro-battery (SIM) comprising:
- at least one flexible encapsulating substrate (6) made of at least one biocompatible and degradable polymer;
- a first and a second electrically conductive biocompatible and degradable film or foil forming a current collector (20;30), each comprising two main faces (21, 22; 31, 32), one of which (22;32) is linked to the flexible substrate (6) whereas the other (21; 31) supports an active biocompatible and degradable electrode material (23;33) arranged under the form of micropillars (24; 34) extending from the current collector in defining a 3D electrode (2, 3), the electrode active material supported by the second collector being of opposite polarity to that supported by the first collector;
- a biocompatible and degradable polymer electrolyte (1), arranged between the two 3D electrodes (2; 3) with contact with the micropillars (24; 34) and filling the gaps between said micropillars.

2. The sodium-ion (Na-ion) micro-battery according to Claim 1, wherein the polymer of the flexible encapsulating substrate is selected among poly (lactic-co-glycolic acid) (PLGA), a polyester urethane or a mixed thereof.

3. The sodium-ion (Na-ion) micro-battery according to Claim 1 or Claim 2, wherein the first and/or the second collector is made of magnesium (Mg).

4. The sodium-ion (Na-ion) micro-battery according to one of the preceding claims, wherein the active material of the positive electrode is made of Na_{0.44}MnO₂ (NMO).

5. The sodium-ion (Na-ion) micro-battery according to Claim 4, wherein the material is obtained by mixing 80 wt % NMO with 15 wt % acetylene black and with 5 wt % Na-carboxymethylcellulose (Na-CMC) using water as a solvent.

6. The sodium-ion (Na-ion) micro-battery according to one of the preceding claims, wherein the active material of the negative electrode is made of a NaTi₂(PO₄)₃ carbon (NTP-C) composite.

7. The sodium-ion (Na-ion) micro-battery according to Claim 6, wherein the material is obtained by mixing 80 wt % NTP-C with 15 wt % acetylene black and with 5 wt % Na-carboxymethylcellulose (Na-CMC) using water as a solvent.

8. The sodium-ion (Na-ion) micro-battery according to one of the preceding claims, wherein the polymer electrolyte is a gel polymer composed of an ionic conductor polymer, Na salt, and plasticizer.

9. The sodium-ion (Na-ion) micro-battery according to Claim 8, wherein the ionic conductor polymer is selected among sodium carboxymethyl cellulose (Na-CMC), polyethylene glycol (PEG).

10. The sodium-ion (Na-ion) micro-battery according to Claim 8 or Claim 9, wherein the Na salt is selected among Na₂SO₄, Na₂SO₃.

11. The sodium-ion (Na-ion) micro-battery according to one of the preceding claims, comprising an additional biocompatible and degradable film, as an electrical insulating separator, arranged between the two 3D electrodes (2; 3), preferably made of sodium carboxymethyl cellulose (Na-CMC).

12. The sodium-ion (Na-ion) micro-battery according to one of the preceding claims, wherein the thickness of the flexible encapsulating substrate is between 1 to 100 µm.

13. Use of the micro-battery according to one of claims 1 to 12 to electrically supply a connected and communicating object, a biomedical device, a human implant, a bioelectronic device and a human/machine interface.
